Europäisches Patentamt

European Patent Office

Office européen des brevets

(19)

(11) Veröffentlichungsnummer: **0 123 785**
**B1**

(12) # EUROPÄISCHE PATENTSCHRIFT

(45) Veröffentlichungstag der Patentschrift:
11.06.86

(51) Int. Cl.⁴: **B 65 G 21/02,** B 65 G 23/04,
B 65 G 39/02

(21) Anmeldenummer: 84100655.4

(22) Anmeldetag: 23.01.84

(54) Bandfördereinrichtung.

(30) Priorität: 03.03.83 CH 1163/83

(43) Veröffentlichungstag der Anmeldung:
07.11.84 Patentblatt 84/45

(45) Bekanntmachung des Hinweises auf die Patenterteilung:
11.06.86 Patentblatt 86/24

(84) Benannte Vertragsstaaten:
AT DE GB NL SE

(56) Entgegenhaltungen:
CH - A - 583 133
DD - A - 65 221
DE - A - 2 242 662
DE - A - 2 638 316
DE - B - 2 233 832
FR - A - 1 601 493
US - A - 1 530 564
US - A - 2 368 414

(73) Patentinhaber: Sipavag AG, Einsiedlerstrasse 25,
CH-8820 Wädenswil (CH)

(72) Erfinder: Siegwart, Wolfgang, Michael-Blatter-Strasse 6,
D-6603 Sulzbach (DE)

(74) Vertreter: Willi, Anton, J., Alsenmattstrasse 2,
CH-8800 Thalwil (CH)

LIBER, STOCKHOLM 1986

## Beschreibung

Gegenstand der Erfindung ist eine in ihrer Breite variable Klein-Bandfördereinrichtung mit einem zwei Längsträger miteinander verbindenden, dem endlosen Förderband als Auflage dienenden Zwischenteil und mit zwei an den Längsträgerenden gelagerten Umlenkrollen für das Förderband, von welchen die eine einseitig antreibbar ist und die andere leer läuft, welche Umlenkrollen aus von den Längsträgern getragenen Achsstummeln mit auf diesen drehbar gelagerten Endzapfen und einem diese Endzapfen fest miteinander verbindenden Mantelrohr bestehen.

Bandfördereinrichtungen dieser Zum Stand der Technik gehören den Art, wie sie in vielen Industrien zum Werkstück- oder Produkttransport verwendet werden, besitzen meist einen der Breite des zur Verwendung gelangenden Transportbandes angepassten Tragrahmen, in dessen Endpartien die parallelachsigen Umlenkrollen gelagert sind, zwischen welchen eine dem oberen Bandtrum als Auflage dienende Deckplatte die Längsteile des Rahmens fest verbindet. Deckplatte und Längsteile des Rahmens sind meist aus einem Blechstück geformt.

Je nach Anwendungsfall sind nicht nur die den Umlenkrollenabstand bestimmende Länge des Transportweges, sondern auch die Breite von Förderband, Umlenkrollen und Tragrahmen verschieden. Dies führte bisher dazu, dass die Einzelelemente der Bandfördereinrichtung erst nach Bekanntsein der gewünschten Abmessungen hergestellt und zur fertigen Einrichtung zusammengebaut werden konnten, d.h. es handelte sich meist um Einzelanfertigungen. Auch eine Normung bezüglich Rahmen- bzw. Förderbandbreite konnte nicht viel daran ändern, da einerseits die Zahl der Normbreiten, z.B. zwischen 5 und 50 cm, aus naheliegenden Gründen nicht allzugross gewählt werden konnte, und anderseits die Lagerhaltung der verschiedenen Tragrahmen und Umlenkrollen zu überdurchschnittlichem Platzbedarf führt. Zwar sind aus der FR-PS 1 601 493 leerlaufende Laufrollen für das Förderband bekannt geworden, deren Mantelrohr aus einem oder mehreren durch Endprofilierung fest mit Endzapfen bzw. miteinander verbundenen Rohrstücken gebildet ist. Eine stufenlose Anpassung der Rolle an jede gewünschte Breite innerhalb eines relativ grossen Breitenbereiches ist damit nicht möglich, wobei auch Herstellung und Montage solcher zusammengesetzter Rollen kaum wirtschaftlich ist. Zur Herstellung angetriebener Umlenkrollen war ausserdem stets ein besonderer, aussen mit Angriffstellen für den Antrieb versehener Endzapfen erforderlich.

Bei Grossförderanlagen, z.B. gemäss DE-OS 22 42 662, deren endloses Förderband ausschliesslich über Rollen führt, ist es auch bekannt, den die Rollen tragenden Unterbau aus C-förmigen Längsträgern zu bilden, welche zwecks Verbreiterung der Anlage durch ein mehr oder minder breites U-förmiges Zwischenstück miteinander verbunden werden. Für jede gewünschte Breite muss aber ein eigenes Zwischenstück hergestellt werden.

Die vorliegende Erfindung bezweckt demgegenüber die Schaffung einer Bandförderanlage der genannten Art, die sich aus wenigen von der gewünschten Transportbandbreite völlig unabhängigen und somit in grosser Zahl platzsparend in Vorratslagern haltenden Einzelteilen zusammensetzen lässt, wobei nur wenige, einfach zu bearbeitende Elemente eine Anpassung an die gewünschte Einrichtungsgrösse bedingen.

Zu diesem Zweck ist die erfindungsgemässe Bandfördereinrichtung dadurch gekennzeichnet, dass der Zwischenteil eine an mit ihrer Oberseite etwa in der Bandauflageebene liegenden Flanschen der Längsträger befestigte Platte ist, während die Achsstummel der beiden Umlenkrollen unter sich gleich ausgebildet und je mit einer radial abgesetzten Zylinderpartie versehensind, wobei das auf den einander zugekehrten Zylinderpartien drehfest sitzende Mantelrohr der antreibbaren Umlenkrolle auf der Antriebseite um die Breite eines an dieser Zylinderpartie angreifenden Treibriemens axial zurückgesetzt ist, welcher Treibriemen vom Förderband überdeckt ist.

Da Längsträger, Rollenendzapfen und Achsstummel unter sich identische und von der jeweiligen Einrichtungs- bzw. Bandbreite völlig unabhängig sind, lassen sie sich in grosser Stückzahl auf Vorrat anfertigen und lagern; sowohl der zweckmässig als Platte ausgebildete, die Längsträger verbindende Zwischenteil als auch das die Endzapfen der Umlenkrollen verbindende Mantelrohr sind einfache und in einfacher Weise auf die jeweils gewünschte Breite bearbeitbare Elemente; dies gilt natürlich auch für die Bereitstellung der Längsträger und des Verbindungsteils in der jeweils gewünschten Länge. Die Elemente stellen bezüglich Montage (z.B. durch Schweissen, Schrauben, Festklemmen, Kleben etc.) keine Probleme. Abgesehen davon hat der Besteller einer solchen Einrichtung erstmals die Möglichkeit, trotz Serienfabrikation und Vorratshaltung der wesentlichsten Teile die ihm zusagende Länge und Breite der Einrichtung praktisch genau und völlig frei vorzuschreiben.

Die Erfindung ist im folgenden anhand der bei liegenden Zeichnung beispielsweise erläutert; in der Zeichnung zeigt:

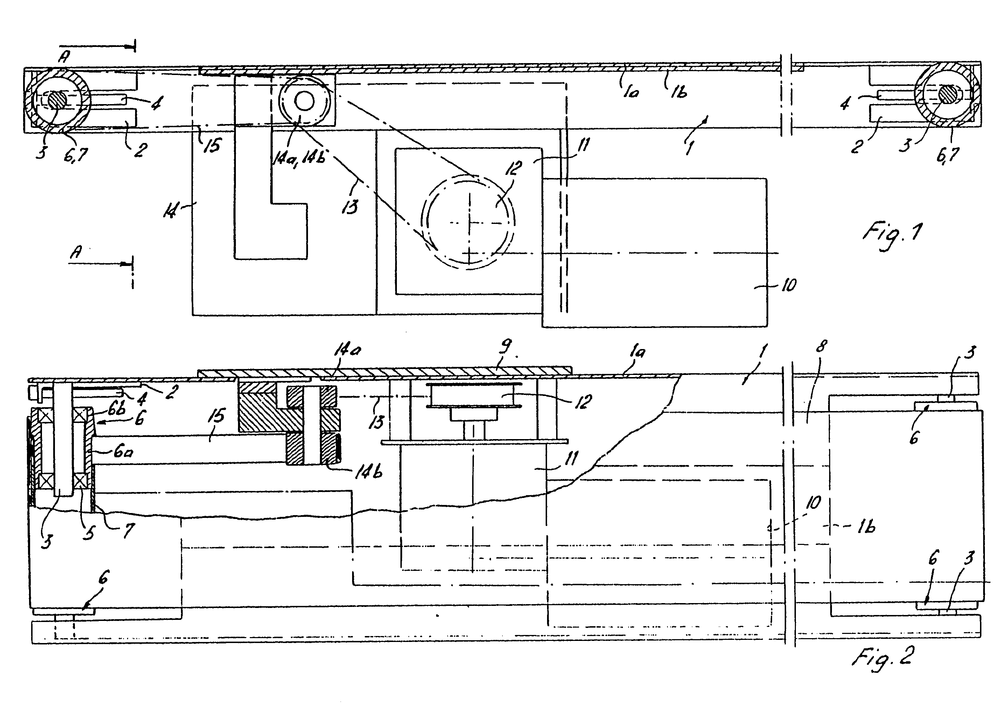

Fig. 1 eine Bandfördereinrichtung im vertikalen Längsschnitt.

Fig. 2 eine Draufsicht zu Fig. 1, teilweise horizontal geschnitten,

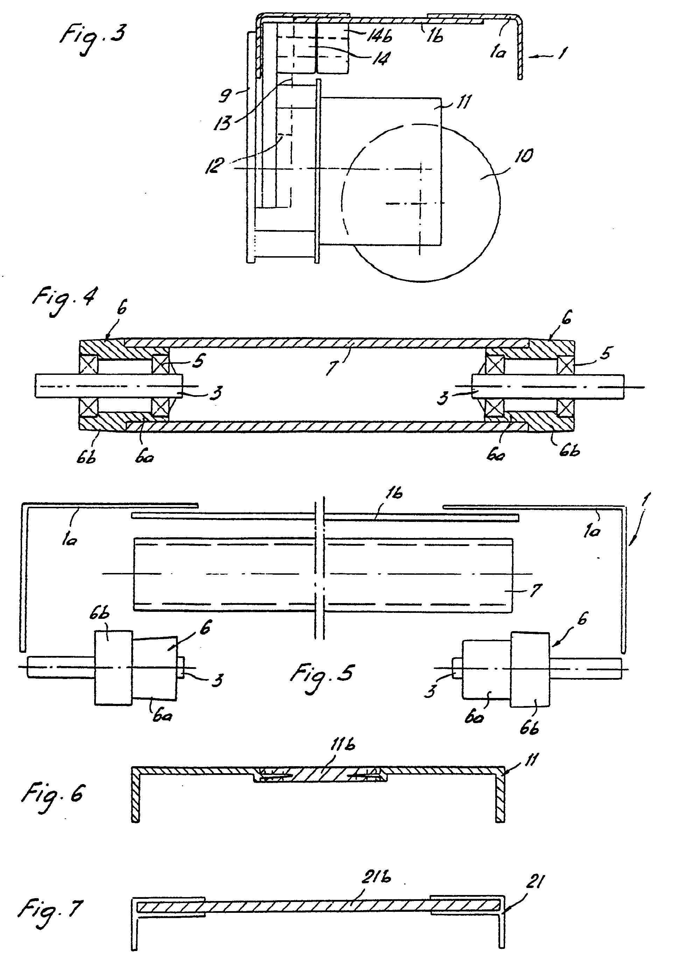

Fig. 3 einen vertikalen Querschnitt nach der Linie A: A in Fig. 1,

Fig. 4 in grösserem Massstab eine Umlenkrolle der Einrichtung,

Fig. 5 im Massstab gemäss Fig. 4 und in Stirnansicht die wesentlichsten Elemente der Einrichtung vor ihrem Zusammenbau, und

Fig. 6 und 7 im Querschnitt je eine Variante des Tragrahmens der Einrichtung.

Gemäss Zeichnung besitzt die Bandfördereinrichtung einen Tragrahmen 1, der aus zwei unter sich gleichen spiegelbildlich angeordneten Winkelprofilen 1a und einer die oberen Profilschenkel miteinander verbindenden Zwischenplatte 1b besteht. An den Endpartien der nach unten ragenden Schenkel der Winkelprofile 1a sind längsgeschlitzte Haltewinkel 2 befestigt. In den Längsschlitzen der Haltewinkel 2 sind Achsstummel 3 geführt, die je mittels einer eine Gewindebohrung des Achsstummels 3 durchsetzenden, am Stirnteil des Haltewinkels 2 abgestützten Schraube 4 verstellbar in ihrer Lage im Längsschlitz des Haltewinkels 2 fixiert sind. Auf den Achsstummeln 3 ist mittels Kugellagern 5 je ein hohler Endzapfen 6 gelagert. Auf eine abgesetzte Zylinderpartie 6a der unter sich gleichen einander paarweise spiegelbildlich gegenüberliegenden Endzapfen 6 ist die Endpartie eines zylindrischen Mantelrohres 7 geschoben und drehfest fixiert. Der mit dem Mantelrohr 7 bündige Aussenabschnitt 6b der Endzapfen 6 ist nach aussen hin leicht konisch verjüngt.

Aus dem Vorangehenden ist ersichtlich, dass Länge und Breite des die Hauptelemente der Fördereinrichtung darstellenden Tragrahmens 1 durch entsprechendes Ablängen der Winkelprofile 1 und der Zwischenplatte 1b bzw. Breitenwahl der Zwischenplatte 1a und der Mantelrohre 7 frei gewählt werden können, wobei die gleichen Winkelprofile 1, Achsstummel 3 und Endzapfen 6 für Einrichtungen unterschiedlicher Breite verwendbar sind.

Das um die Umlenkrollen 6, 7 geführte, mit seinem oberen Bandtrum über die durch die oberen Profilschenkel 1a und die Zwischenplatte 1b gebildete Rahmenoberseite laufende Förderband 8 kann in unterschiedlicher Weise angetrieben werden. So könnte es unterhalb des Tragrahmens 1 um weitere Umlenkrollen geführt sein, von welchen eine mittels eines Elektromotors antreibbar ist, oder es kann eine der beiden von den Endpartien des Rahmens selbst getragenen Umlenkrollen angetrieben sein, wie dies beim gezeichneten Beispielder Fall ist. Die Antriebseinheit dieser Einrichtung ist an einer Seitenplatte 9 montiert, die am einen Winkelprofil 1, z.B. mittels Schrauben, befestigt ist. An dieser Seitenplatte 9 ist ein Elektromotor 10 mit zugeordnetem Getriebe 11 montiert, dessen Abtriebwelle eine Riemenscheibe 12 trägt, die über einen Antriebsriemen 13 mit einer Rolle 14a in Antriebsverbindung steht, die ihrerseits über eine auf der gleichen in einem Träger 14 gelagerten Achse festsitzende weitere Rolle 14b und einen Treibriemen 15 mit der einen der beiden Umlenkrollen 6,7 antriebsverbunden ist. Wie aus der Zeichnung ersichtlich, führt der Antriebsriemen 13 seitlich neben dem Förderband 8 in den Bereich des Tragrahmens 1, wobei der Treibriemen 15 zwischen dem oberen und unteren Trum des Förderbandes 8 auf den Zylinderabschnitt 6a des betreffenden Endzapfens 6 der Umlenkrolle 7 führt. Das Mantelrohr 7 dieser Umlenkrolle ist entsprechend kürzer, wobei das Förderband 8 Mantelrohr und Treibriemen überdeckt und seitlich auch den konisch verjüngten Abschnitt 6b des Endzapfens 6 teilweise übergreift.

Wie in Fig. 5 schematisch gezeigt, sind die den Aufbau der Bandfördereinrichtung bestimmenden Elemente, nämlich Winkelprofile 1, und mittels der Lager 5 auf Achsstummeln 3 gelagerte Endzapfen 6, völlig breitenunabhängig: sie lassen sich serienmässig in grösseren Stückzahlen herstellen und lagern. Je nach der vom Kunden gewünschten Breite der Bandfördereinrichtung lassen sie sich durch entsprechend bemessene Zwischenplatten 1b und Mantelrohre 7 schnell und einfach zusammenmontieren. Wie die Fig. 6 und 7 zeigen, können die Zwischenplatte 11b bzw. 21b bzw. die Längsträger 11 bzw. 21 des Tragrahmens auch anders als in Fig. 5 gezeigt, ausgebildet sein. In jedem Fall aber hängt die Rahmenbreite nur von der Breitenbemessung der Zwischenplatte ab.So können gemäss Fig. 6 die oberen Schenkel der Längsträger 11 einen mit Dornen versehenen Randflansch aufweisen, die in die aus geeignetem Material bestehende Zwischenplatte 11b eingepresst werden. Bei der in Fig. 7 gezeigten Ausführungsform ist der obere Schenkel des Längsträgers 21 mit einer durchlaufenden Längsnut versehen, in welche die Zwischenplatte 21b eingesetzt ist.

Es versteht sich, dass alle Zusatzelemente, z.B. die Winkelhalter 2, die Antriebseinheit etc., ebenfalls unabhängig von der gewünschten Einrichtungsbreite sind. Zu beachten ist, dass das Verbinden der Zwischenplatte (die auch als Gitter oder Lochplatte ausgebildet sein könnte) mit den Längsträgern auch durch Kleben oder Schweissen erfolgen kann, während der Rohrmantel der Umlenkrollen auch durch Aufpressen auf eine Riffelung des Zylinderabschnitts der Endzapfen mit den letzteren fest verbunden werden kann.

**Patentansprüche**

1. Eine in ihrer Breite variable klein Bandfördereinrichtung mit einem zwei Längsträger (1) miteinander verbindenden, dem endlosen Förderband (8) als Auflage dienenden Zwischenteil (1b) und mit zwei an den Längsträgerenden gelagerten Umlenkrollen (6, 7) für das Förderband (8), von welchen die eine einseitig antreibbar ist und die andere leer läuft, welche Umlenkrollen aus von den Längsträgern (1a) getragenen Achsstummeln (3) mit auf diesen drehbar gelagertem Endzapfen (6) und einem diese Endzapfen fest miteinander verbindenen Mantelrohr (7) bestehen, dadurch gekennzeichnet, dass der Zwischenteil (1b) eine an mit ihrer Oberseite etwa in der Bandauflageebene liegenden Flanschen (1a) der Längsträger (1) befestigte Platte ist, während die Endzapfen (6) der beiden Umlenkrollen unter sich gleich ausgebildet und je mit einer radial abgesetzten Zylinderpartie (6a) versehen sind, wobei das auf den einander zugekehrten Zylinderpartien (6a) drehfest sitzende Mantelrohr (7) der antreibbaren Umlenkrolle auf der Antriebseite um die Breite eines an dieser Zylinderpartie (6a) angreifenden Treibriemens (15) axial zurückgesetzt ist, welcher Treibriemen vom Förderband (8) überdeckt ist.

2. Bandfördereinrichtung nach Anspruch 1, dadurch gekennzeichnet, dass der zwischen oberem und unterem Förderbandtrum verlaufende Treibriemen (15) über eine Zwischenwelle und einen seitlich ausserhalb des Förderbandes (8) an dieser angreifenden Antriebsriemen (13) mit einem unterhalb des unteren Förderbandtrums liegenden Antriebsmotor (11) verbunden ist.

## Claims

1. A small belt conveyor system variable in its width, comprising an intermediate member (1b) acting as a support for the endless conveyor belt (8) and interconnecting two longitudinal bearers (1), and comprising two deflector rollers (6, 7) for the conveyor belt (8) and journalled on the longitudinal bearer extremities, of which one is drivable unilaterally and the other runs idle, which deflector rollers comprise stub axles (3) carried by the longitudinal bearers (1a) and terminal pivots (6) rotatably installed thereon, and a jacket tube (7) rigidly interconnecting these terminal pivots, characterised in that the intermediate member (1b) is a plate secured to flanges (1a) of the longitudinal bearers (1) which have their top side extending approximately in the belt support plane, whereas the terminal pivots (6) of the two deflector rollers are of identical structure and are each provided with a radially stepped cylindrical portion (6a), the jacket tube (7) of the drivable deflector roller co-rotatorily seated on the mutually opposed cylindrical portions (6a) being set back axially on the driven side by the width of a driving belt (15) acting on ths cylindrical portion (6a), which driving belt is covered by the conveyor belt (8).

2. A belt conveyor system according to claim 1, characterised in that the driving belt (15) running between the upper and lower conveyor belt sections is coupled to a driving motor (11) situated beneath the bottom conveyor belt section via an intermediate shaft and a driving belt (13) acting on said shaft laterally beyond the conveyor belt (8).

## Revendications

1. Installation à petite bande transporteuse réglable en largeur comportant une pièce intermédiaire (1b) reliant entre elles deux poutres longitudinales (1) et servant d'appui à la bande transporteuse sans fin (8), comportant également deux poulies de guidage (6, 7) de la bande transporteuse (8) situées aux extrémités des poutres longitudinales, l'une des poulies pouvant être actionnée unilatéralement, tandis que l'autre tourne à vide, ces poulies étant constituées de tourillons (3) portés par les poutres longitudinales (1a) avec des pivots (6) montés rotatifs sur les tourillons et un tube de protection (7) reliant solidement ces pivots entre eux, caractérisée en ce que la pièce intermédiaire (1b) est une plaque fixée par sa paroi supérieure aux brides (la) des poutres longitudinales (1) situées environ au niveau de l'appui de la bande, tandis que les pivots (6) des deux poulies de guidage sont conçus de la même façon et sont munis d'une partie cylindrique (6a) décalée latéralement, le tube de protection (7) de la poulie de guidage pouvant être actionnée, étant assis sans possibilité étant reculé latéralement, du côte de l'actionnement, d'une distance égale à la largeur d'une courroie d'entraînement (15) qui mord sur cette partie cylindrique (6a) et est recouverte par la bande transporteuse (8).

2. Installation à bande transporteuse selon la revendication 1, caractérisée en ce que la courroie d'entraînement (15) située entre la partie supérieure et la partie inférieure de la bande transporteuse est reliée à un moteur de commande (11) situé en dessous de la partie inférieure de la bande transporteuse au moyen d'un arbre intermédiaire et d'une courroie de transmission (13) située latéralement à l'extérieur de la bande transporteuse (8) et mordant sur cette dernière.

Fig. 1

Fig. 2

0 123 785

Fig. 3

Fig. 4

Fig. 5

Fig. 6

Fig. 7